**Europäisches Patentamt**

**European Patent Office**

**Office européen des brevets**

(19)

(11) Veröffentlichungsnummer: **0 222 028**
**B1**

(12) # EUROPÄISCHE PATENTSCHRIFT

(45) Veröffentlichungstag der Patentschrift:
**28.12.88**

(51) Int. Cl.⁴: **G 01 V 3/10**

(21) Anmeldenummer: **85113952.7**

(22) Anmeldetag: **02.11.85**

(54) **Metalldetektor zur Erkennung von metallischen Gegenständen.**

(43) Veröffentlichungstag der Anmeldung:
**20.05.87 Patentblatt 87/21**

(45) Bekanntmachung des Hinweises auf die Patenterteilung:
**28.12.88 Patentblatt 88/52**

(84) Benannte Vertragsstaaten:
**BE CH DE GB IT LI**

(56) Entgegenhaltungen:
**DE-A- 3 228 447**
**US-A- 3 300 768**
**US-A- 3 588 685**
**US-A- 3 758 849**

**PROCEEDINGS 1981 CARNAHAN CONFERENCE ON CRIME COUNTERMEASURES Nr. 81CH1661-8, 13-15. März 1981, Lexington, Seiten 173-176, IEEE, New York, US; W.J. POLLARD: "Luggage, parcel & personnel screening in the 80,s"**

(73) Patentinhaber: **Vallon GmbH, Im Grund 3, D-7412 Eningen u.A. (DE)**

(72) Erfinder: **Aichele, Gerd, Rothenburgerstrasse 42, D-7410 Reutlingen (DE)**

(74) Vertreter: **Ott, Elmar, Dipl.-Ing., Kappelstrasse 8, D-7240 Horb 1 (DE)**

**Beschreibung**

Die Erfindung betrifft einen Metalldetektor zur Erkennung von metallischen Gegenständen gemäss Oberbegriff des Anspruchs 1.

Metalldetektoren werden für unterschiedliche Anwendungsbereiche eingesetzt und basieren auf der Messung von Veränderungen des elektromagnetischen Feldes, die durch in einer zu überwachenden Zone befindliche Gegenstände hervorgerufen werden. Metalldetektoren werden im Sicherheitsbereich beispielsweise zur Passagierkontrolle auf Flughäfen oder zur Besucherkontrolle von besonders geschützten Gebäuden oder Einrichtungen eingesetzt. In der Industrie sind ebenfalls vielseitige Anwendungsmöglichkeiten für Metalldetektoren gegeben.

Aus der DE-OS 3 228 447 ist ein Metalldetektor zur Erkennung von metallischen Gegenständen bekannt, bei dem eine Feldspule impulsförmig angeregt wird und mittels zweier gegensinnig geschalteter Empfangsspulen und einer nachgeschalteten Auswerteeinrichtung die Feldbeeinflussung festgestellt bzw. gemessen wird. Insbesondere bei der Verwendung in sogenannten Torrahmen, durch die zu überprüfende Personen hindurchgehen, kann ein festzustellender metallischer Gegenstand entweder sehr dicht an der Feldspule oder an den Empfangsspulen vorbeigeführt werden. Da jedoch die Empfindlichkeit mit zunehmendem Abstand von den Empfangsspulen abnimmt und bei dieser Anordnung bei den Feldspulen ihr Minimum erreicht, können in Abhängigkeit von der Lage des metallischen Gegenstandes unterschiedliche Messsignale in dem Empfangsspulen auftreten.

Aus der US-A-3 758 849 ist ein Metalldetektor bekannt, der zu beiden Seiten einer zu überwachenden Zone jeweils eine Sendespule und eine Empfangsspule vorsieht. Die von beiden gegenüberliegenden Feldspulen abgestrahlten Magnetfelder überlagern sich und werden in den zugeordneten Empfangsspulen empfangen. In der dazwischenliegenden zu überwachenden Zone ist bei dieser Anordnung ein überlagertes Magnetfeld vorhanden, bei dem jede Empfangsspule von den Magnetfeldern beider Feldspulen beeinflusst wird. Eine hochempfindliche Messung und insbesondere eine getrennte Auswertung bezüglich beider Empfangsspulen ist hier nicht möglich.

Der Erfindung liegt die Aufgabe zugrunde, innerhalb einer zwischen Magnetfeldspulen befindlichen, zu überprüfenden Zone eine möglichst gleichmässige Empfindlichkeitsverteilung zu erhalten.

Die Lösung dieser Aufgabe wird durch die im Hauptanspruch angegebenen Merkmale erhalten. Die zu beiden Seiten der Zone befindlichen Feldspulen können in kurzen zeitlichen Abständen nacheinander für die Messung im Impulsbetrieb aktiviert werden, so dass entsprechend abwechselnd die maximale Empfindlichkeit einmal auf der einen Seite und dann auf der anderen Seite der Zone auftritt. In gleicher Weise werden die Empfangsspulen nacheinander wirksam geschaltet, wodurch sichergestellt wird, dass jeweils die der gerade aktiven Feldspule gegenüberliegende Empfangsspule wirksam ist, während die andere Empfangsspule aufgetrennt und damit unwirksam ist. Durch diese Massnahmen wird eine hohe Empfindlichkeit und gleichmässige Empfindlichkeitsverteilung innerhalb der zu überwachenden Zone erhalten.

Die miteinander gekoppelten Empfangsspulen jeder Seite sowie jede der Feldspulen können jeweils zu einem Schwingkreis geschaltet sein, so dass eine impulsförmige Erregung der Feldspule eine abklingende Schwingung und ein entsprechend abklingendes Magnetfeld zur Folge hat. Die Empfangsspulen bilden dabei einen abgestimmten Schwingkreis, der auf die Sendefrequenz abgestimmt ist.

Die Empfangsschleifen sind auf jeder der beiden Seiten der zu überwachenden Zone praktisch in der gleichen Ebene wie die räumlich zugeordnete Feldspule angeordnet und unterteilen die von der Feldspule umschlossene Fläche in zwei gleiche nebeneinanderliegende Hälften. Eine zu überprüfende Person durchschreitet die überwachte Zone so, dass sie zunächst an der einen Empfangsspule und dann an der danebenliegenden Empfangsspule vorbei kommt. Die in den Empfangsspulen induzierten Ströme werden in der Auswerteeinrichtung verglichen und angezeigt oder lösen bei Überschreiten eines Schwellwertes ein Signal aus.

Anstelle separater Feldspulen können auch zwei nebeneinander angeordnete Schleifen sowohl als Feldspulen als auch als Empfangsspulen dienen. Zur Abstrahlung des Magnetfeldes sind die Schleifen dann in Reihe geschaltet, während sie im Empfangsbereich gegensinnig geschaltet sind.

Die Erfindung wird nachfolgend anhand der Zeichnungen näher erläutert. Es zeigen:

Fig. 1 eine vereinfachte bekannte Schaltungsanordnung,

Fig. 2 das Blockschaltbild eines erfindungsgemässen Metalldetektors,

Fig. 3 eine im Bereich der Spulen geänderte Ausführung und

Fig. 4 eine Anordnung mit auftrennbaren Empfangsspulen.

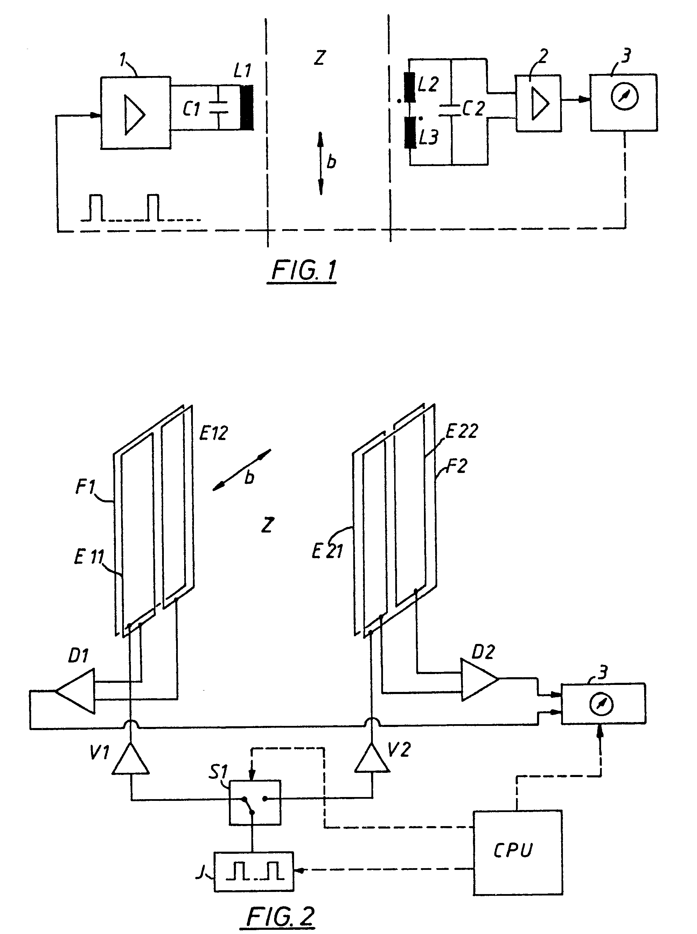

Bei dem in Figur 1 dargestellten bekannten Metalldetektor ist die zu überwachende Zone Z durch seitliche, unterbrochene Linien begrenzt. Auf der einen Seite befindet sich eine Feldspule L1, die zusammen mit einem Kondensator C1 einen Schwingkreis bildet, der über einen Verstärker 1 in zeitlichen Abständen gepulst wird. Auf der anderen Seite sind zwei gegensinnig miteinander verbundene Empfangsspulen L2, L3 angeordnet, die zusammen mit einem Kondensator C2 ebenfalls einen Schwingkreis bilden. Über einen Messverstärker 2 werden die empfangsseitig auftretenden Signale einer Auswerteeinrichtung 3 zugeführt, die eine analoge Anzeige hat oder bei Überschreiten eines Schwellwertes ein Signal abgibt.

Die Bewegungsrichtung der zu überwachenden Personen bzw. der festzustellenden metallischen Gegenstände ist durch einen Pfeil b angegeben.

Das in Figur 2 dargestellte Blockschaltbild zeigt einen Metalldetektor, bei dem zu beiden Seiten der Zone Z jeweils eine Feldspule F1; F2 und zwei Empfangsspulen E11, E12; E21, E22 vorhanden sind. Die Feldspulen werden über einen Umschalter S1 und nachfolgende Verstärker V1, V2 abwechselnd durch

Erregerimpulse zur Abstrahlung eines Magnetfeldes angeregt. Eine zentrale Steuereinheit CPU steuert zu diesem Zweck einen Impulsgeber I, der an seinem Ausgang über den Schalter S1 Erregerimpulse über den Verstärker V1 zur Feldspule F1 liefert. Wird der Schalter S1 von der zentralen Steuereinheit CPU in die andere, hier nicht dargestellte Stellung gebracht, so gelangt der nächste Erregerimpuls über den Verstärker V2 zur Feldspule F2. Die an den Empfangsspulen E11, E12; E21, E22, die jeweils gegensinnig geschaltet sind, empfangenen Signale werden über Differenzverstärker D1; D2 einer Auswerteeinrichtung 3 zugeführt. Die von den Differenzverstärkern D1, D2 zur Auswerteeinrichtung 3 übertragenen Messsignale können alternativ oder auch gleichzeitig in der Auswerteeinrichtung 3 verarbeitet werden. Je nach Anwendungsfall kann auch die Summe der Messsignale in der Auswerteeinrichtung 3 verarbeitet und zur Anzeige gebracht werden.

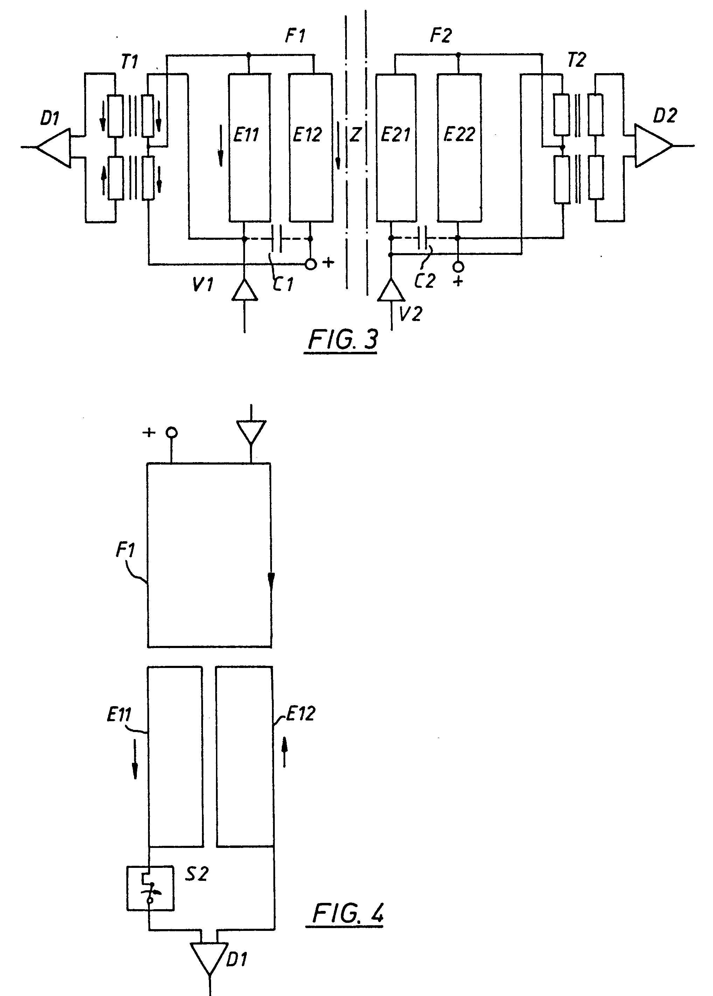

Die Differenzverstärker D1, D2 können auch während der Zeiten eingangsseitig aufgetrennt werden, während deren die räumlich zugeordnete Feldspule ein Magnetfeld abstrahlt. Diese Möglichkeit ist in Figur 4 durch einen steuerbaren Schalter S2 angedeutet. In Figur 4 sind die Feldspule F1 und die Empfangsspule E11, E12 der übersichtlicheren Darstellung wegen untereinander gezeichnet, jedoch überdecken die Schleifen der Empfangsspulen E11, E12 in Wirklichkeit die von der Schleife der Feldspule F1 umschlossene Fläche, wie dies in Figur 2 dargestellt ist.

Figur 3 zeigt eine besondere Anordnung der Empfangsspulen E11 - E22, die an Übertrager T1, T2 so angeschlossen sind, dass die Spulen bei Einspeisung über die Verstärker V1, V2 in Reihe geschaltet als Feldspulen F1, F2 wirken, während dieselben Spulen mittels Übertrager T1, T2 gegensinnig gekoppelt sind, so dass deren Differenzspannungen den Eingängen der Differenzverstärker D1, D2 zugeführt werden. Der Stromverlauf in den Spulen und der Spannungsabfall an den Übertragern ist für die linke Seite durch Pfeile gekennzeichnet.

Die unterhalb der Spulen angedeuteten Kondensatoren C1, C2 können vorgesehen sein, wenn ein Schwingkreis zusammen mit den zugehörigen Spulen gebildet werden soll, wie dies bei der in Figur 1 dargestellten Schaltung der Fall ist.

Es wird noch angemerkt, dass in Figur 4 nur eine Anordnung mit Feldspule F1 und Empfangsspulen E11, E12 dargestellt ist, obgleich an der zu überwachenden Zone an zwei gegenüberliegenden Seiten jeweils eine derartige Anordnung gemäss Figur 2 vorgesehen ist. Es besteht aber grundsätzlich auch die Möglichkeit, nur an einer Seite der zu überwachenden Zone eine Anordnung gemäss Figur 4 vorzusehen, bei der dann die räumlich unmittelbar der Feldspule F1 zugeordneten Empfangsspulen E11, E12 zur Feststellung der durch metallische Gegenstände hervorgerufenen Magnetfeldveränderung dienen. Eine solche Anordnung kann insbesondere dann Verwendung finden, wenn aufgrund der räumlichen Verhältnisse sichergestellt ist, dass die metallischen Gegenstände möglichst dicht an den Spulen vorbeigeführt werden. Sofern stark unterschiedliche Empfindlichkeiten zugelassen werden können, kann eine solche einseitige Anordnung auch für die Überwachung breiterer Zonen eingesetzt werden.

## Patentansprüche

1. Metalldetektor zur Erkennung von metallischen Gegenständen, der insbesondere als Torrahmen ausgebildet ist, der mittels zu beiden Seiten einer zu überwachenden Zone (Z) angeordneten Feldspulen (F1, F2) Magnetfelder abstrahlt und der die in der zu überwachenden Zone (Z) durch dort befindliche metallische Gegenstände hervorgerufenen Feldbeeinflussungen mittels Empfangsspulen (E11, E12; E21, E22) in einer Auswerteeinrichtung (3) feststellt, dadurch gekennzeichnet, dass in kurzen Zeitabständen nacheinander von beiden gegenüberliegenden Feldspulen (F1, F2) durch kurze Erregerimpulse eine Magnetfeldabstrahlung erfolgt, und dass während der Feldabstrahlung die auf der gleichen Seite der jeweils aktiven Feldspule (F1; F2) angeordnete Empfangsspule (E11, E12; E21, E22) aufgetrennt und damit unwirksam ist.

2. Metalldetektor nach Anspruch 1, dadurch gekennzeichnet, dass als Empfangsspulen (E11, E12; E21, E22) auf jeder der beiden Seiten jeweils zwei Empfangsschleifen nebeneinander angeordnet sind, von denen jede eine Hälfte der von der räumlich zugeordneten, als Feldspule (F1; F2) dienenden Sendeschleife umschlossenen Fläche umschliesst.

3. Metalldetektor nach einem der vorhergehenden Ansprüche, dadurch gekennzeichnet, dass auf jeder Seite der Zone (Z) zwei nebeneinander angeordnete Schleifen in Reihe geschaltet als Feldspulen (F1, F2) und gegensinnig geschaltet als Empfangsspulen (E11, E12; E21, E22) dienen.

## Claims

1. Metal detector for detecting metal objects, which is in particular in the form of a gate, which by means of field coils (F1, F2) arranged on both sides of a zone (Z) to be monitored radiates magnetic fields and which determines by means of receiving coils (E11, E12; E21, E22) in an evaluating device (3) the influencing of the field in the zone (Z) being monitored caused by metal objects located therein, characterised in that radiation of a magnetic field takes place at short intervals in succession from the two opposed coils (F1, F2) by means of short excitation pulses, and that during radiation of the field the receiving coil (E11, E12; E21, E22) arranged on the same side as the currently active field coil (F1; F2) is cut off and is therefore ineffective.

2. Metal detector according to Claim 1, characterised in that as receiving coils (E11, E12; E21, E22) on each of the two sides two receiving loops are arranged adjacent to each other, each of which encompasses one half of the area encompassed by the spatially associated transmitting loop serving as field coil (F1; F2).

3. Metal detector according to one of the preceding Claims, characterised in that on each side of the zone (Z) two loops arranged adjacent to each other, connected in series serve as field coils (F1, F2) and connected in opposite directions serve as receiving coils (E11, E12; E21, E22).

**Revendications**

1. Détecteur de métaux pour détecter des objets métalliques se présentant en particulier sous forme de portillon de contrôle qui engendre des champs magnétiques au moyen de bobines de champ (F1, F2) disposées de part et d'autre de la zone à surveiller (Z) et qui détermine dans un dispositif d'évaluation (3) et au moyen de bobines de réception (E11, E12; E21, E22) les modifications du champ provoquées dans la zone à surveiller (Z) par les objets métalliques qui s'y trouvent, caractérisé en ce qu'un champ magnétique est créé par les deux bobines de champ (F1, F2) opposées l'une à l'autre et excitées par de courtes impulsions l'une après l'autre à de courts intervalles de temps et en ce que pendant l'existence de ce champ la bobine de réception (E11, E12; E21, E22) disposée du même côté que la bobine de champ (F1; F2) active à ce moment est coupée et donc rendue inactive.

2. Détecteur de métaux selon la revendication 1, caractérisé en ce que les bobines de réception (E11, E12; E21, E22) sont constituées par deux boucles de réception disposées chacune des deux côtés et l'une à côté de l'autre et dont chaque fois une moitié entoure la surface entourée par la boucle d'émission servant de bobine de champ (F1; F2).

3. Détecteur de métaux selon l'une des revendications précédentes, caractérisé en ce que deux boucles disposées l'une à côté de l'autre de chaque côté de la zone (Z) sont connectées en série pour servir de bobines de champ (F1, F2) et sont connectées en opposition pour servir de bobines de réception (E11, E12; E21, E22).

FIG. 1

FIG. 2

FIG. 3

FIG. 4